# Europäisches Patentamt

# European Patent Office

## Office européen des brevets

(11) Publication number: **0 214 672**
**B1**

(12) **EUROPEAN PATENT SPECIFICATION**

(45) Date of publication of patent specification: **09.05.90**

(51) Int. Cl.⁵: **C 10 M 175/00,** C 10 G 31/09, B 01 D 61/14

(21) Application number: **86112656.3**

(22) Date of filing: **12.09.86**

(54) Process for the purification of oils.

(30) Priority: **13.09.85 IT 2214585**

(43) Date of publication of application:
**18.03.87 Bulletin 87/12**

(45) Publication of the grant of the patent:
**09.05.90 Bulletin 90/19**

(84) Designated Contracting States:
**BE DE FR GB IT NL SE**

(56) References cited:
**EP-A-0 041 013
EP-A-0 052 719
DE-A-2 417 452
DE-A-3 215 003
GB-A- 419 007
US-A-3 406 831
US-A-3 606 016
US-A-3 977 967**

(73) Proprietor: **AUSIMONT S.r.l.
Foro Buonaparte 31
I-20121 Milano (IT)**

(72) Inventor: **Calloni, Enzo
24, Via Molise
I-20059 Monza (IT)**
Inventor: **Valente, Maurizio
59, viale Misurata
I-20146 Milan (IT)**
Inventor: **Raiola, Alfonso
70, via Teodosio
I-20131 Milan (IT)**

(74) Representative: **Barz, Peter, Dr. et al
Patentanwälte Dipl.-Ing. G. Dannenberg Dr. P.
Weinhold, Dr. D. Gudel Dipl.-Ing. S. Schubert, Dr.
P. Barz Siegfriedstrasse 8
D-8000 München 40 (DE)**

Courier Press, Leamington Spa, England.

## Description

The present invention relates to a process for the purification of perfluoropolyether oils contaminated with different impurities and, in particular, with dispersed solid matter which can be filtered only with difficulty with conventional filters. The process is useful, for instance, for regenerating perfluoropolyether oils used as fluids in vacuum pumps wherein, during use, the oil is progressively polluted by foreign substances that may be present in the oil either in solution or in the form of finely-dispersed solid matter. In many cases the dispersed solid substances are either in the form of gels or gums or mucilages which may form a film of practically impermeable matter that drastically reduces the filter efficiency of the filters of the conventional type.

It is known from GB—A—1 561 696 that it is very difficult or almost impossible to eliminate fine particles of foreign materials dispersed in non-conductive liquids, such as, for example, oils, by using a film. The British patent discloses an apparatus for the electrostatic purification of oils by using various collecting members for the impurities, inserted between anode and cathode plates, parallel to the electric field created in the apparatus. The value of the applied voltage is determined by the size of the particles and increases as the particles become smaller. This method is, however, not practical when a large amount of oil has to be purified and, furthermore, it is also very expensive.

Thus, it is an object of the present invention to provide a very simple and efficient process for the purification of perfluoropolyether oils, which does not require complicated and expensive apparatuses.

The process according to the present invention is suitable for the treatment of perfluoropolyether oils which are used in vacuum pumps, for thermal tests of electronic apparatuses and in plasma-etching processes employing gaseous agents such as $SiCl_4$, $CF_4$, $Cl_2$ or $O_2$ and which contain impurities in the form of gels or gums or mucilages.

Perfluoropolyether employed for these purposes are, for instance, Fomblin® (registered trademark of Montedison), Krytox® (Du Pont) and similar products known on the market by the name Tyreno® (Klüber) and Barierta®, as well as the perfluoropolyethers produced according to EP—A—148482.

Several methods are known for the purification of perfluoropolyethers contaminated with liquid impurities such as hydrocarbons (mineral oils). Such methods are, usually, based on extraction by means of solvents or on chemical treatment for removing traces of water (US—A—4 178 465). These methods, however, do not solve the problem concerning the removal of solid impurities, in particular, those in the form of a gel.

The basic operations involved in the process according to the invention are:

—An optional degassing for removing volatile products, which is preferably carried out by blowing an inert gas such as nitrogen into the oil which is kept at room temperature or a temperature above room temperature.

—Filtration for removing the solids in suspension, which is carried out by using a filter of the tangential-flow type, wherein the liquid to be filtered is passed onto the filter surface at high speed, thus avoiding the formation of a deposit of solid material on the surface itself. The diameter of the pores of the filter surface has to be very small so as to achieve a complete separation of the smallest solid particles as well. Diameters of less than 0.4 μm and, preferably, in the order of about 0.2 μm, are required.

A suitable type of filter for carrying out the filtration is that produced by Membrana Inc., U.S.A., and marketed under the names DYNA-SEP® and PHARMA-SEP®. The filtering surface of such a filter consists of a cylindrical or tubular element made of porous polypropylene, through which the liquid to be filtered is passed at high speed and is kept at a pressure above that outside the tubular surface. On leaving the tubular filtering surface, the filtrate is collected while the liquid to be filtered is recycled continuously until the concentration of dispersed solid substances reaches a high value. The pressure of the liquid to be filtered obviously depends on the characteristics of the apparatus which may, at the most, be operated at a pressure of up to 4 bar.

The temperature of the liquid is obviously an important factor as well. A certain temperature limit cannot be exceeded. This is determined by the thermal resistance of the material of the filter element. For the filters described above, this temperature limit is 60°C.

The process according to the invention may also comprise accessory, additional operations such as a previous decantation for a preliminary separation of coarser solids and of liquid, immiscible impurities, if present, and a preceding filtration on a filter capable of separating the coarser particles in order to lower the solids content of the liquid to be conveyed to the tangential-flow filter.

After the filtration in the filter of the tangential-flow type according to the present invention, the perfluoropolyether oil can be used directly as a fluid in vacuum pumps or it can be subjected to neutralization in order to eliminate acidic or busic substances that might be present. In particular, the neutralization of oils having acidic impurities can be carried out with a cartridge charged with activated alumina, activated carbon or sodium carbonate.

The following examples illustrate the purification of a few types of oil in accordance with the present invention.

Example 1

Product to be purified: 12 kg Fomblin® Y L VAC 25/5 oil used in pumping assemblies of an apparatus for plasma-etching with $SiCl_4$, $CF_4$, $Cl_2$, $O_2$ as gaseous agents. The product, having a light- brown colour, contained solid substances dispersed in the form of a gel. After decantation over a period of three weeks no separation of distinct phases was achieved. The product, kept at 50°C, was degassed in a heated metal container by blowing 135 l/h of nitrogen into the product for 4 hours.

The degassed product was then subjected to a pre-filtration with a filter having a pore diameter of 15 μm, at a pressure of 1.7 bar.

Filtration with a DYNA-PHARMA® filter which had a filter element with a pore diameter of 0.2 μm, a filter cartridge of about 51 cm in length and a filtering surface of about 19.5 dm² was started.

Operating conditions: Filtration temperature 50 to 55°C; inlet pressure 2.2 bar; outlet pressure 0.8 to 0.9 bar.

The filtration was carried out until 11.3 kg of oil had been recovered which corresponded to 94% by weight of the starting product. The average filtration rate was 11.5 l/h.

Example 2

Product to be purified: about 20 kg of Fomblin® Y L VAC oil coming from an apparatus for ion implantation and contaminated, inter alia, with $PH_3$ and $AsH_3$.

Decantation: After two weeks a distinct liquid phase having a brown colour was formed. The main phase was separated and pre-filtration with a filter consisting of cellulose nitrate having a pore diameter of 25 μm was started. The liquid to be filtered was kept at 60°C.

The pre-filtered liquid was then conveyed to a tangential filter having a filter cartridge as described in example 1. The filtration temperature was 60°C, the inlet pressure 2.2 bar and the outlet pressure 0.8 to 0.9 bar.

An average filtration rate of 7.7 l/h was noted.

Comparative example

The pre-filtered liquid was subjected to filtration on a vacuum filter of the conventional type with a filtering membrane made of cellulose nitrate having a pore diameter of 0.8 μm. The filtration rate decreased very quickly and, after 1 hour, the filter was completely clogged and the amount of collected filtrate was negligible.

Claims

1. A process for the purification of perfluoropolyether oils as used in vacuum pumps employed in thermal tests of electronic apparatuses or in plasma-etching processes employing gaseous agents and containing impurities in the form of gels or gums or mucilages, which comprises filtration of the undiluted perfluoropolyether oil by means of a filter of the tangential-flow type, wherein the pores of the filter element have a diameter of less than 0.4 μm

2. A process according to claim 1, wherein a degassing treatment by introducing a flow of inert gas and/or a pre-filtration on a conventional filter is carried out before filtration on the tangential-flow filter.

3. A process according to claim 1 or 2, wherein the tangential-flow filter is provided with a filter element having a pore diameter of about 0.2 μm.

4. A process according to any one of claims 1 to 3, wherein the filter element consists of porous polypropylene.

5. A process according to any one of claims 1 to 4, wherein the oil to be purified is subjected to previous decantation so as to remove liquid impurities immiscible with the oil, if present.

Patentansprüche

1. Verfahren zur Reinigung von Perfluorpolyether-Ölen, wie sie in Vakuumpumpen verwendet werden, die in Wärmetests für eletronische Vorrichtungen oder in Plasmaätzverfahren mit gasförmigen Mitteln eingesetzt werden, und die Verunreinigungen in Form von Gelen, Gummen oder Schleimen enthalten, welches umfaßt die Filtration des unverdünnten Perfluorpolyether-Öls mit Hilfe eines Filters vom Tangentialströmungstyp, wobei die Poren des Filterelments einen Durchmesser von weniger als 0.4 μm haben.

2. Verfahren nach Anspruch 1, worin vor der Filtration auf dem Tangentialströmungs-Filter eine Entgasungsbehandlung durch Einleiten eines Inertgasstromes und/oder eine Vorfiltration auf einem herkömmlichen Filter durchgeführt wird.

3. Verfahren nach Anspruch 1 oder 2, worin das Tangentialströmungs-Filter mit einem Filterelement bereitgestellt wird, das einen Porendurchmesser von etwa 0,2 μm aufweist.

4. Verfahren nach irgendeinem der Ansprüche 1 bis 3, worin das Filterelement aus porösem Polypropylen besteht.

5. Verfahren nach einem der Ansprüche 1 bis 4, worin das zu reinigende Öl vorher dekantiert wird, um eventuelle flüssige Verunreinigungen, die mit dem Öl nicht mischbar sind, abzutrennen.

Revendications

1. Un procédé de purification d'huiles de perfluoropolyéther telles que celles utilisées dans les pompes à vide, employées dans des tests thermiques de dispositifs électroniques ou dans des procédés de gravure au plasma employant des agents gazeux et contenant des impuretés sous la forme de gels ou de gommes ou de mucilages, caractérisé en ce qu'il comprend une filtration de l'huile de perfluoropolyéther non diluée au moyen d'un filtre du type à écoulement tangentiel dans lequel les pores de l'élément filtrant ont un diamètre inférieur à 0,4 μm.

2. Un procédé selon la revendication 1, dans lequel on met en oeuvre un traitement de dégazage par production d'un courant de gaz inerte et/ou une pré-filtration sur un filtre classique avant la filtration sur le filtre à écoulement tangentiel.

3. Un procédé selon la revendication 1 ou 2, dans lequel le filtre à écoulement tangentiel est pourvu d'un élément filtrant dont le diamètre des pores est d'environ 0.2 μm.

4. Un procédé selon l'une queconque des revendications 1 à 3, dans lequel l'élément filtrant est constitué de polypropylène poreux.

5. Un procédé selon l'une quelconque des revendications 1 à 4, dans lequel on soumet l'huile à purifier à une décantation préalable de façon à éliminer les impuretés non-miscibles à l'huile, s'il y en a.